**Europäisches Patentamt**

**European Patent Office**

**Office européen des brevets**

(19)

(11) Veröffentlichungsnummer: **0 075 155 B1**

(12) # EUROPÄISCHE PATENTSCHRIFT

(45) Veröffentlichungstag der Patentschrift:
09.04.86

(21) Anmeldenummer: **82108082.7**

(22) Anmeldetag: **02.09.82**

(51) Int. Cl.⁴: **B 23 G 1/02**

(54) **Verfahren zur Reinigung von Sacklochgewinden in Reaktor-Druckbehältern bei abgenommenem und bei aufliegendem Reaktordeckel durch eine Reinigungsmaschine, sowie eine Maschine zur Ausübung des Verfahrens.**

(30) Priorität: **10.09.81 DE 3135882**

(43) Veröffentlichungstag der Anmeldung:
**30.03.83 Patentblatt 83/13**

(45) Bekanntmachung des Hinweises auf die Patenterteilung:
**09.04.86 Patentblatt 86/15**

(84) Benannte Vertragsstaaten:
**BE CH FR GB IT LI SE**

(56) Entgegenhaltungen:
**DE - A - 1 657 181**
**DE - A - 2 606 214**
**DE - A - 2 704 571**
**DE - A - 2 948 006**
**DE - C - 2 732 882**

(73) Patentinhaber: **NTG Nukleartechnik Gesellschaft m.b.H. u. Partner, Am Spielacker, D-6460 Gelnhausen-Hailer (DE)**

(72) Erfinder: **Ortmayer, Rudolf M., Am Krauterain 1, D-6464 Linsengericht-Geislitz (DE)**
Erfinder: **Pick, Werner, Ostring 7, D-6483 Bad Soden-Salmünster (DE)**

(74) Vertreter: **Munderich, Paul, Dipl.-Ing., Frankfurter Strasse 84, D-6466 Gründau-Rothenbergen (DE)**

## Beschreibung

Die Erfindung betrifft ein Verfahren zur Reinigung von Sacklochgewinden in Reaktor-Druckbehältern eines Kernkraftwerkes bei aufliegendem Reaktordeckel durch eine Reinigungsmaschine, im wesentlichen während der beitsbühne aus, der sie als mobile Hängekonstruktion verbunden ist, und die in ihrem oberen Bereich in bekannter Weise einen als Wartungseinheit ausgebildeten fernbedienbaren Steuerblock A und ein in einem zylindrischen Gehäuse angeordnetes Antriebsoberteil B zum Antrieb des Bürstenkopfes aufweist, wobei zur Unterstützung der Reinigung über den Bürstenkopf Blasluft zugeführt und abgesaugt wird.

Durch die DE-OS 26 06 214 ist ein Gerät zum Reinigen der Gewindegänge von in dem oberen Rand des Druckgefäßes eines Kernkraftwerkes eingearbeiteten Gewindelöchern bekannt, deren Kriterium mindestens eine fernbedienbare und umlaufende, in das betreffende Gewindeloch absenkbare Reinigungsbürste ist, die auf einer dem zu reinigenden Gewinde parallelen Kreisbahn geführt ist, wobei die Vorrichtung als solche durch die Ansprüche 18 bis 22 beschrieben ist, und nach den gegebenen Ausführungen auf Seite 18 ein solches Gerät von der Arbeitsbühne aus an einem Tragseil soweit abgesenkt wird, bis der abschließende, in der Regel über zwei Gewindelöcher greifende Flansch mit Führungskegel in die benachbarten Gewindelöcher eingreift.

Erst nach Einnahme dieser Arbeitsstellung wird durch einen Luftmotor die den Bürstensatz tragende Hohlwelle in Umdrehung versetzt und bei geringer Drehzahl durch einen elektromagnetisch gesteuerten Luftzylinder ein langsames Absenken der lediglich axial verschiebbaren, die drehende Hohlwelle axial unverschiebbar tragenden Führungshülse bewirkt, wobei die Hohlwelle wiederum Träger des Bürstensatzes ist.

Nach Eingriff des Bürstensatzes in den Bereich der oberen Gewinde wird die Drehzahl der Hohlwelle insoweit erhöht, daß die Bürsten aufgrund der Fliehkraft unter Druck in die zu reinigenden Gewindegänge eingreifen, ohne daß dabei eine Aufhebung der durch den Luftzylinder veranlaßten absenkenden Bewegung stattfindet.

Bei Erreichung einer durch Anschlag vorbestimmten Tiefstellung wird der Luftmotor stillgesetzt und die Rückführung der Reinigungsbürste der Hohlwelle und der Hülse durch den elektromagnetisch gesteuerten Luftzylinder in eine obere Anschlagstellung bewirkt, wobei bei der Ausführung des Reinigungskopfes aus dem Gewinde durch den dann gegebenen Fortfall der Fliehkraft der Eingriff der Bürsten in das Gewinde aufgehoben ist und diese, bedingt durch Federwirkung, in ihre Ruhestellung zurückgeführt sind.

Das Herausfahren des Reinigungskopfes aus dem Gewinde erfolgt also praktisch ohne Kontakt mit diesem, d.h. es ist für den Reinigungsvorgang wirkungslos.

Zusammenfassend ist zu der DE-OS 26 06 214 zu bemerken, daß die Lockerung und die Abreinigung der Gewindegänge von Verschmutzungen lediglich durch mechanischen Angriff erfolgt, wobei die Entfernung der mechanisch gelösten Verschmutzung durch deren Absaugung stattfindet.

Die Niederbringung des Bürstenkopfes durch einen Hubzylinder, bei gleichzeitigem Eingriff der Bürsten in die Gewindegänge, führt zwangsläufig zu einer erhöhten abrasiven Beanspruchung der Gewindeflanken, da der Reinigungskopf nicht entsprechend der Gewindesteigung "eingeschraubt", sondern entsprechend dem Vorschub des Zylinders geschoben wird.

Durch die meist gegebene große Entfernung zwischen Arbeitsbühne und RDB werden die schon erwähnten Führungsprobleme noch erschwert.

Einrichtungen dieser Art sind für die Reinigung von Außengewinden geeignet.

Aufgrund dieser Sachlage, ist es Aufgabe dieser Erfindung, ein Verfahren nach der eingangs beschriebenen Art sowie eine Vorrichtung zur Durchführung des Verfahrens zu nennen, das speziell darauf abgestimmt ist, die Sacklochgewinde eines RDB, bei Aufrechterhaltung der Auflage des RDB-Deckels, mit großer Wirksamkeit und Aufrechterhaltung einer bis zum Gewindegrund reichenden gleichmäßigen Reinigungsintensität, bei gleichzeitigem Ausschluß jeder Kontaminationsgefahr für das Bedienungspersonal und schadloser Beseitigung der von den Gewinden gelösten Korrosions- und Schmiermittelrückständen zu ermöglichen.

Die Vorrichtung muß bei Einhaltung kürzester Umrüstzeiten einfach zu handhaben sein.

Die erfindungsgemäße Lösung dieser Aufgabe sieht vor,

daß die im weiteren stufenförmig von oben nach unten aufgebaute Maschine, bestehend aus:

einem zylindrischen Zwischenstück C für die Trennung der bzw. des Absaugerohre(s) und der Werkzeugträgerwelle;

einem Antriebsunterteil D, das gleichzeitig Führungsrohr für den Durchgang durch den RDB-Deckel ist und dessen Länge mit der Flanschstärke dieses Deckels korrespondiert, wobei dessen oberer zum Zwischenstück C gerichteter begrenzender Flansch, einseitig klauenförmig über den RDB-Deckel greifend als Drehmomentenstütze ausgebildet ist, und im Bereich des Überganges zum eigentlichen Führungsrohr eine gegen den RDB-Deckel abdichtende Dichtung vorgesehen ist, sowie weiter im Antriebsunterteil D, korrespondierend mit dem Aus- bzw. Einfahrweg der Werkzeugträgerwelle, eine sich bewegende Absaugeeinrichtung abdichtend geführt ist, und

daß im weiteren die sich drehende Werkzeugträgerwelle durch Formschluß zwischen dem von ihr getragenen Bürstenkopf mit dem zu reinigenden Gewinde so lange nach unten bewegt wird, bis ein zweiter, wegeabhängiger Schalter "Motor-Stop" und "Motor-Start-Linkslauf" bestimmt und sich der Bürstenkopf E nunmehr bis zu seiner Wiedereinkupplung mit dem Hubzylinder nach oben schraubt.

Die stufenförmig, aus fünf Hauptteilen A bis E, aufgebaute, als Hängekonstruktion ausgebildete Maschine, ist in an sich bekannter Weise über mobile, sowohl in der Vertikalen als auch in ihrer Auslegerweite einstellbare Mittel der Arbeitsbühne verbunden. Diese Mittel lassen ein genaues Einfahren in die jeweilige Arbeitsposition zu, wobei dieser Vorgang durch Verbringung des Antriebsunterteiles D in die entsprechende DurchgangsÖffnung des RDB-Deckels für dieses Hilfsmittel jeweils beendet ist.

Die weitere Steuerung der Maschine erfolgt durch Betätigung der mit dem Steuerkopf A verbundenen Fernbedienungstastatur.

Zum Steuerblock ist zu bemerken, daß dieser das Hauptventil für die pneumatische Steuerung aufnimmt, wobei im einzelnen Druckluftanschlüsse für die Versorgung der Maschine mit Steuerluft, mit Arbeitsluft für den Antrieb des Antriebsmotors und zur Versorgung des abzureinigenden Bereiches mit Blasluft vorgesehen sind.

Dem Steuerblock verbunden ist der im oberen Bereich des Gehäuses angeordnete Wegeventilschalter für die Veranlassung der Befehle "Motor-Start-Rechtslauf" und "Blasluft-Ein", sowie im unteren Bereich ein zweiter, entsprechend dem gewünschten Hubweg einzustellender Wegeventilschalter zur Veranlassung der Befehle "Motor-Stop" und "Motor-Start-Linkslauf". Das Absetzender Blasluft erfolgt erst mit dem Austritt des Bürstenkopfes aus dem Gewinde und wird in der Regel bei Wiedererreichung der Ausgangslage des Bürstenkopfes bzw. der ihn tragenden Antriebseinheit gegeben. Die zunächst gegebene Zwangsführung des Bürstenkopfes in der axialen Richtung durch den Hubzylinder sichert dessen exakten Eingriff in das Gewinde und in umgekehrter Richtung, nach Beendigung dessen Reinigungsvorganges, dessen einwandfreie Lösung vom Gewinde, so daß ein "Nachschleifen" der ersten Gewindegänge vermieden wird.

Die Blaslufteinführung über den Bürstenkopf schützt, in Verbindung mit der gleichzeitig wirksamen Absaugung des abzureinigenden Raumes, das Bedienungspersonal vor jeder Kontaminationsgefahr.

Zur Blaslufteinführung wird vorgeschlagen, daß die Blasluft in zwei von einer zentrischen Zuführung ausgehende, über in radial gerichtete Verbindungen in verschiedenen Ebenen angeordnete Ringkanäle einmündet, wobei der zuerst in das Gewinde einführende, unten liegende Kanal die Blasluft in Richtung der Düsen überführt, die die Auflockerung der Anhaftungen veranlassen, während der oben liegende Ringkanal die Luft zu den radial gerichteten Rundbürsten zur Unterstützung der Endabreinigung überführt, und daß die Fortsetzung der zentralen Luftzuführung in einen gegen das Ende, düsenförmig sich verengenden Austritt einmündet, und die Luft gegen den Grund des Sacklochgewindes führt, wo sie, in Verbindung mit vertikal gerichteten Tellerbürsten, die Ablagerungen abhebt und der Absaugung zugänglich macht.

Die Zuführung der Blasluft über zwei verschiedene Ebenen in das Gewinde bei gleichzeitiger Zuführung einer gegen den Gewindegrund gerichteten Teilluftmenge sichert eine optimale Auflockerung und Abreinigung bei gleichzeitiger Einstellung von für die Abluftabsaugung wirksamen Strömungen. Eine vorgesehene Kombination von radial gerichteten Rundbürsten und von achsparallel zur Welle angeordneten, gegen den Grund des Gewindes gerichteten Tellerbürsten, ist besonders reinigungsintensiv.

Selbstverständlich ist der Bürstenkopf bzw. die Blasluftzuführung im Reinigungsbereich frei gestaltbar und den jeweiligen Anforderungen anpaßbar.

In diesem Zusammenhang soll erwähnt werden, daß der Bürstenkopf z.B. gegen eine sogenannte Molykotisierungseinrichtung austauschbar ist.

Diese besteht aus einem mit Molykote getränkten, zylindrisch entsprechend dem Gewindedurchmesser ausgebildeten Filzscheibenpaket, das eine intensive Gewindepflege nach vollzogener Reinigung ermöglicht.

Zur Konzeption der Absaugung ist zu bemerken, daß die abzusaugende Luft durch am Bürstenkopf ansetzende Absaugehutzen erfaßt wird und über ein die Werkzeugträgerwelle ummantelndes, mit dieser drehend verbundenes Rohr in eine lediglich in der Vertikalen verschiebbaren Abluftsammelkammer abdichtend einmündet, während die Werkzeugträger: welle, im weiteren ebenfalls abdichtend, durch diese Kammer hindurch führt, und daß die Abluft der Abluftsammelkammer über mindestens ein als Teleskopzug ausgebildetes in das Zwischenstück einmündendes Absaugerohr geführt wird und von hier über weitere Verbindungen dem mit geeigneten Filtern ausgerüsteten Werknetz angeschlossen wird.

Die unmittelbare Absaugung der mit Schmutzteilen angereicherten Blasluft am Bürstenkopf über Absaugehutzen, deren Weiterleitung durch ein mit der Werkzeugträgerwelle mitdrehendes Mantelrohr, das abdichtend in eine radial fixierte Abluftsammelkammer überführt in weitere, zum Zwischenstück führende Absaugerohre, die über Teleskopverbindungen angeschlossen sind und die von hier dem Werknetz verbunden sind, wird sowohl der Austritt von Absaugeluft als auch der Eintritt zusätzlicher Falschluft in die Absaugeluft mit großer Sicherheit vermieden.

Da der Schmutzanteil fallweise so groß ist, daß mit Anbackungen in den Abluftrohren gerechnet werden muß, ist vorgesehen, daß die Abluftzuführung im Zwischenstück über zumindest eine flexible lösbare Leitung erfolgt.

Da das Zwischenstück mit einer MontageÖffnung versehen ist, können die flexiblen Schlauchleitungen gelöst werden und die eigentlichen Absaugerohre mit geeigneten Hilfsmitteln von oben nach unten durchstoßen werden, so daß die gelösten, im wesentlichen in der Abluftsammelkammer anfallenden Schmutzpartikel, bei Wiederherstellung der Verbindung im Zwischenstück, durch Absaugen ebenfalls dem Werknetz zugefürt werden können.

Obwohl, wie eingangs betont, das Verfahren speziell auf die Abreinigung von Sacklochgewinden im RDB konzipiert wurde, ist auch deren anderweitiger Einsatz möglich.

Eine die Durchführung des eingangs beschriebanen Verfahrens ermöglichende Vorrichtung sieht vor, daß im Gehäuse des Antriebsoberteiles eine Antriebseinheit für den Antrieb der Werkzeugträgerwelle gebildet ist, die, auf einer Antriebsträgerplatte aufbauend, zur Antriebsseite gerichtet, eine Langlagerkombination für die radiale und axiale Führung der durch die Antriebsträgerplatte tretenden und hier mit einem Stirnrad formschlüssig verbundenen Welle sowie einen Druckluftlamellenmotor, dessen Antriebswelle durch die Trägerplatte greift, aufweist, wobei mit der Antriebswelle des Motors ein in das Stirnrad eingreifendes Ritzel verbunden ist, daß weiter in der Antriebsträgerplatte ein mit seinem Bund zur Antriebsseite gerichtetes zweites, lose mitlaufendes Ritzel angeordnet ist, wobei der Bund oder die mit diesem Bund verbundene Welle für den Ansatz eines Hilfsantriebsmittels ausgerüstet ist, daß auf der Antriebsseite der Antriebsträgerplatte ein Hubnocken angeordnet ist, in den, durch Steuergestänge lösbar bzw. ausklinkbar, eine Hubknagge eingreift, die ihrerseits mit der Kolbenstange des am oberen Flansch des Gehäuses angelenkten Hubzylinders verbunden ist, daß die Antriebsträgerplatte in achsparallel zur Werkzeugträgerwelle im Gehäuse angeordneten Säulen führbar ist, und daß Druckluftanschlüsse für den Antrieb des Druckluftlamellenmotors, die Betätigung des Hubzylinders und für die Zuführung von Blasluft über die Werkzeugträgerwelle vorgesehen sind.

Die klare Gliederung der im Gehäuse des Antriebsoberteiles angeordneten Antriebseinheit für die Werkzeugträgerwelle sowie der Mittel zu deren Verbindung bzw. Trennung von dem Hubzylinder erlauben eine einfache Kontrolle und Wartung über einen, im Gehäuse des Antriebsoberteiles angeordneten Montagedeckel.

Die Führung der Antriebsträgerplatte im achsparallel zur Werkzeugträgerwelle angeordneten Gehäuse sichert, zusammenwirkend mit den weiteren Führungsmitteln der Werkzeugträgerwelle, deren verkantfreie axiale Führung.

Zur Entlastung der Antriebseinheit und der Werkzeugträgerwelle, einschließlich des Bürstenkopfes, ist vorgesehen, daß die Antriebseinheit und die Werkzeugträgerwelle sowie die mit dieser verbundenen Teile der Absaugung, d.h. das Mantelrohr, die Absaugekammer und das bzw. die dieser unmittelbar anschließenden Absaugerohr(e) einem im Gehäuse verschiebbar geführten Gegengewicht verbunden sind.

Das Verfahren und die zu seiner Durchführung vorgeschlagene Vorrichtung erfüllen in vollem Umfang die Forderungen der Aufgabenstellung.

Das Verfahren, sowie eine zu dessen Ausübung zweckmäßige Maschine wird durch die beigefügten Zeichnungen beispielsweise erläutert.

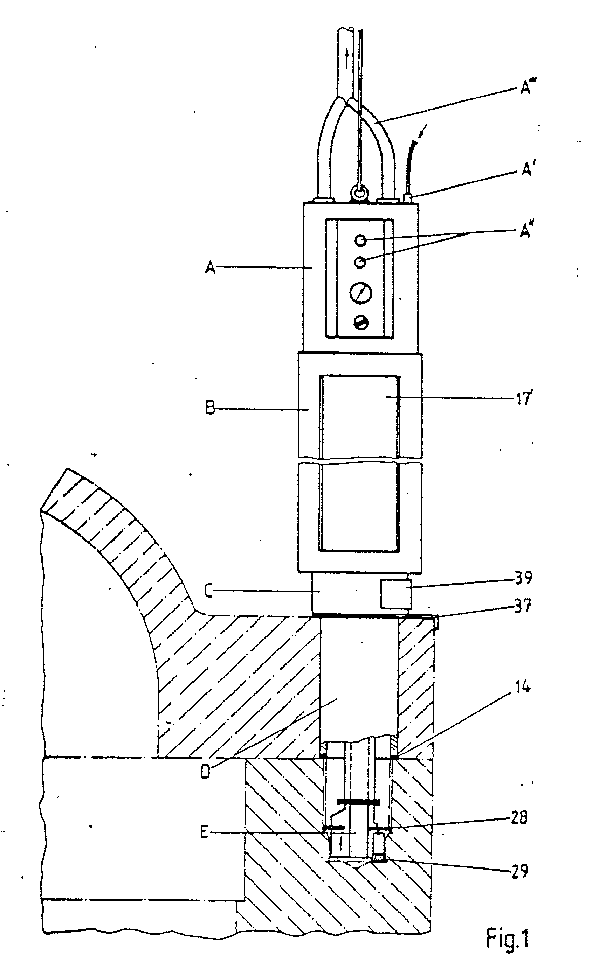

Figur 1 zeigt eine Gesamtdarstellung der Sacklochgewindereinigungsmaschine in Arbeitsstellung, d.h. aufsitzend auf dem RDB-Deckel und durch diesen führend mit eingreifendem Bürstenkopf in das Sacklochgewinde.

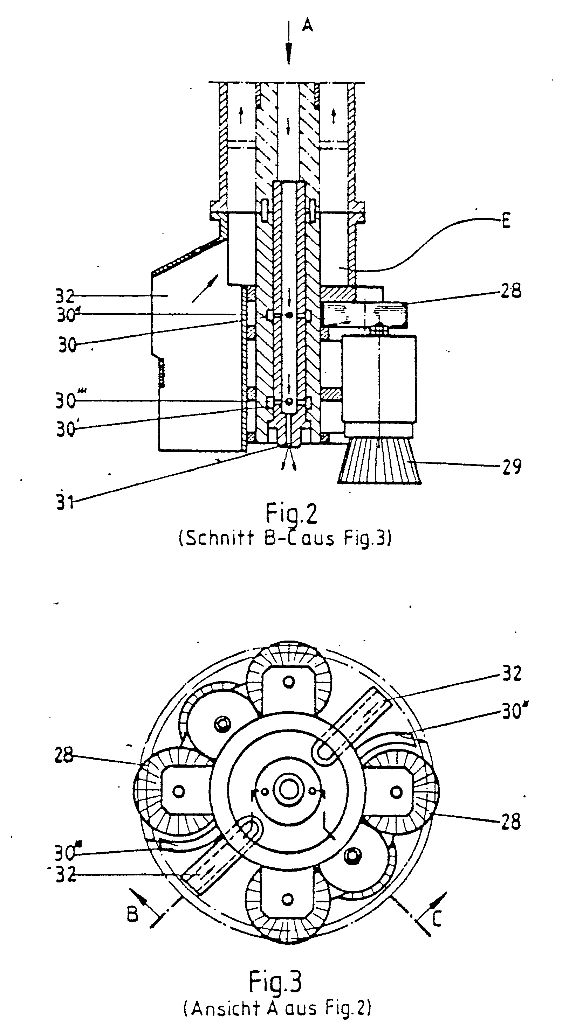

Figur 2 zeigt den Bürstenkopf als Schnitt B-C aus Figur 3 mit Anordnung der Rundbürsten und der Tellerbürsten sowie der Blasluftzuführung und der Absaugung.

Figur 3 zeigt den Bürstenkopf gemäß Figur 2 in Ansicht A aus Figur 2.

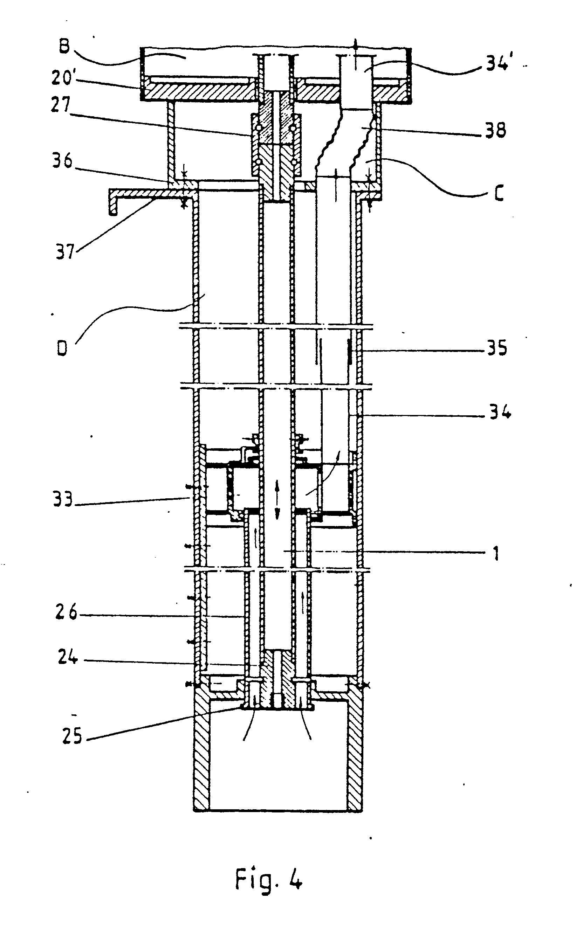

Figur 4 zeigt die Ausbildung des Antriebsunterteiles des Zwischenstückes und eines Teilbereiches des Antriebsoberteiles in Schnittdarstellung.

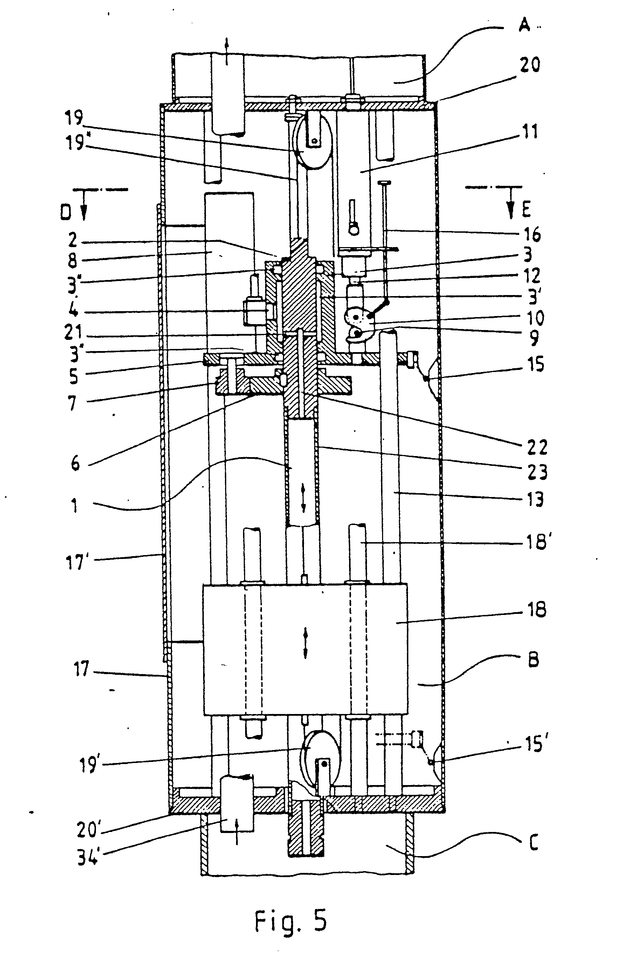

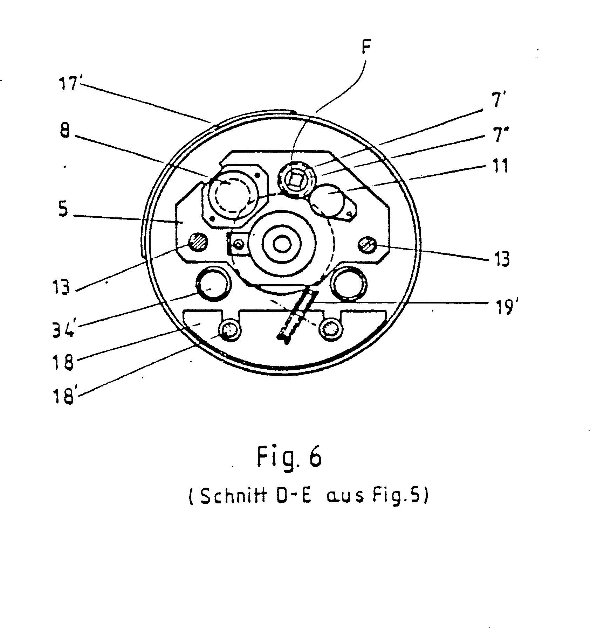

Figur 5 zeigt das auf dem Zwischenstück aufbauende und in den Steuerblock überführende Antriebsoberteil.

Figur 6 zeigt ebenfalls das Antriebsoberteil im Schnitt D-E aus Figur 5.

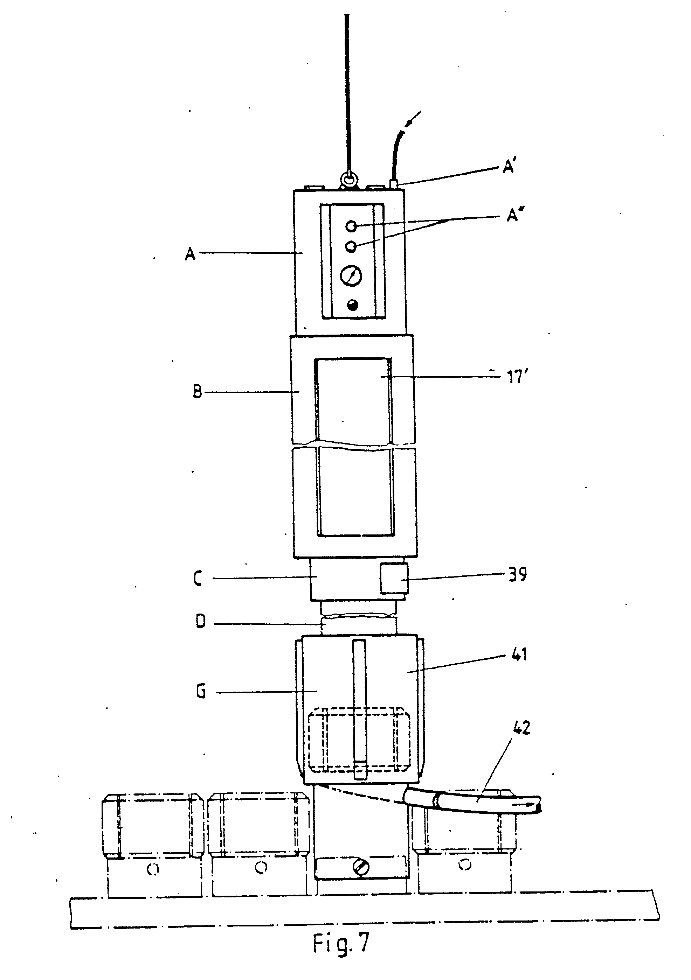

Figur 7 zeigt die Maschine beim Einsatz von separat aufgestellten Spannmuttern.

Die Innengewindereinigungsmaschine wird durch einen mit einem Hauptventil ausgerüsteten Steuerblock A beherrscht. Im Steuerblock A sind Druckluftanschlüsse A' zur Versorgung der Maschine mit Steuerluft, mit Arbeitsluft für den Antrieb des vorzugsweise als Druckluftlamellenmotor 8 ausgebildeten Antriebsmotors und zur Versorgung des Reinigungsbereiches mit Blasluft vorgesehen.

Darüber hinaus ist dem Steuerblock A die Absaugeleitung A'' sowie die Aufhängung für die Maschine verbunden. Des weiteren ist der Steuerblock A als Wartungseinheit für die Schmierung, Wasserabscheidung usw. ausgebildet, sowie mit Anschlüssen für eine pneumatische Fernbedienung A'' der Maschine versehen.

Dem Steuerblock A schließt sich nach unten das zylindrische Gehäuse 17 des Antriebsoberteiles B an, wobei der Kopf 2 der Werkzeugträgerwelle 1 in einer gleichzeitig für die Blasluftzuführung 4 ausgebildeten Langlagerkombination 3 drehbar axial und radial geführt ist.

Der Werkzeugträgerwellenkopf 2 führt durch die Antriebsträgerplatte 5 und ist anschließend, d.h. darunter angeordnet, mit einem Stirnrad 6 formschlüssig verbunden, wobei in dieses Stirnrad 6 das ebenfalls unterhalb der Antriebsträgerplatte 5 achsparallel zur Werkzeugträgerwelle 1 angeordnete, durch einen auf der Antriebsträgerplatte 5 installierten Durckluftlamellenmotor 8 angetriebene Ritzel 7 eingreift.

Des weiteren ist achsparallel zur Werkzeugträgerwelle 1 der Hubnocken 9 für den Eingriff einer Hubknagge 10 auf der Antriebsträgerplatte 5 vorgesehen, wobei diese ausschwenkbar mit dem Kopf der Kolbenstange 12 des Hubzylinders 11 verbunden ist und zunächst formschlüssig in den Hubnocken 9 greift. Die Antriebsträgerplatte 5 ist in achsparallel zur Werkzeugträgerwelle 1 angeordneten zylindrischen Säulen 13 geführt.

Die wesentlichen Teile des Antriebs sind über eine große verschließbare in dem Gehäuse 17 angeordnete

Die Inbetriebnahme erfolgt in aller Regel nach dem Einfahren des Antriebsunterteiles D (d.h. des Führungsrohres) in den RDB-Deckel, wobei zwischen Antriebsunterteil D und Antriebsoberteil B ein später beschriebenes Zwischenstück C geflanscht ist, das sich über den später beschriebenen Flansch 37 des Antriebsunterteiles D abstützt.

Die weitere Inbetriebnahme wird durch die Betätigung des Hubzylinders 11 bewirkt, der seinerseits wieder im Verlauf seines Hubes einen Rollenhebel 15 zur Betätigung des Wegeventilschalters "Motor-Start-Rechtslauf" und "Blasluft-Ein" veranlaßt. Der Hubzylinder 11 führt die Antriebsträgerplatte 5 so weit nach unten, bis der Bürstenkopf E in das Gewinde im RDB eingreift, wobei in dieser Lage der durch ein Gestänge 16 beherrschte Hubweg der Kolbenstange 12 des Hubzylinders 11 die Hubknagge 10 aus dem Hubnocken 9 ausschwenkt und damit die weitere Bewegung der Werkzeugträgerwelle 1 freigibt.

Die Werkzeugträgerwelle 1 wird jetzt unabhängig vom Hubzylinder 11 durch Formschluß zwischen dem von ihr getragenen Bürstenkopf E mit dem zu reinigenden Gewinde nach unten bewegt, d.h. der Bürstenkopf E schraubt sich in das Gewinde ein.

Der Einschraubweg des Bürstenkopfes E entspricht in aller Regel der Gewindelänge, wobei der Tiefstpunkt durch einen unteren Rollenhebel 15' zur Betätigung der Wegeventilschalter "Motor-Stop" und "Motor-Start-Linkslauf" bestimmt ist.

Der Bürstenkopf E und damit die Werkzeugträgerwelle 1 schraubt sich nunmehr bis zur Wiedereinkupplung der Hubknagge 10 in den mit der Antriebsträgerplatte 5 verbundenen Hubnocken 9 hoch und der weitere nach oben gerichtete Rück transport wird bei Aufrechterhaltung der Drehung der Werkzeugträgerwelle 1 jetzt durch den jetzt nach oben ziehend en Hubzylinder 11 veranlaßt und zwar so lange, bis sich die Werkzeugträgerwelle 1 wieder in ihrer oberen Ausgangslage befindet und der obere Rollenhebel 15 die Betätigung der Wegeventilschalter "Motor-Stop" und "Blasluft-Aus" ermöglicht.

Um insbesondere beim Hochfahren des Bürstenkopfes E die Bürstenelemente durch das Gewicht der Antriebseinheit 8/5/6/7 usw., sowie der Werkzeugträgerwelle 1 und Teilen der Absaugevorrichtung zu entlasten, ist in dem zylindrischen Gehäuse 17 des Antriebsoberteiles B ein über Seilrollen 19 und 19' geführtes Gegengewicht 18 integriert, wobei die Lage des Gewichtes 18 innerhalb des Gehäuses 17 in dessen axialer Richtung durch Führungssäulen 18' fixiert ist. Hierbei ist je eine Seilrolle 19 mit dem oberen Abschlußflansch 20 des Gehäuses 17 und je eine Seilrolle 19' mit dem unteren Abschlußflansch 20' des Gehäuses 17 sowie mit dem Gegengewicht 18 über ein Seil 19''mit den zu entlastenden Teilen verbunden. Das Gegengewicht 18 ist ein die Antriebsteile, Abluftleitungen usw. aussparender Formkörper.

Zur Blasluftführung 4 ist zu bemerken, daß, wie eingangs erwähnt, diese in den durch die Langlagerkombination 3 gebildeten Ringraum 3' einmündet. Die Langlagerkombination 3 ist mit der Antriebsträgerplatte 5 verbunden. Der Kopf 2 der Werkzeugträgerwelle 1 ist in dieser Langlagerkombination 3 drehbar axial und radial geführt. Im Bereich zwischen den beiden Hauptführungslagern 3'' wird die Druckluft über ein Steuerventil in den dort gegebenen Ringraum 3' geleitet und tritt durch radial gerichtete Bohrungen 21 in eine zentral durch den Werkzeugträgerwellenkopf 2 gerichtete Bohrung 22 ein, wobei der Kopf 2 in ein mit ihm verbundenes Präzisionsstahlrohr 23 überführt, das im wesentlichen die Werkzeugträgerwelle 1 bildet.

Im unteren Bereich (D) führt die Werkzeugträgerwelle 1 in ein durch Flansch 25 begrenztes Endstück 24 über, wobei der Flansch 25 gleichzeitig Träger des Mantelrohres 26 für die später beschriebene Abluftzuführung ist. Die Werkzeugträgerwelle 1 ist im Zwischenstück C durch eine Kupplung 27 trennbar.

Mit dem Flansch 25 ist der eigentliche Bürstenkopf E verbunden, der in der Regel vier radial gerichtete Rundbürsten 28 und zwei axial gegen den Gewindegrund im RDB gerichtete Tellerbürsten 29 aufweist. Die Führung der Luft erfolgt in diesem Bereich zentrisch. Die Blasluft tritt von hier aus radial in zwei übereinander angeordneten Ebenen vorgesehenen Ringkanäle 30 und 30', die im Bereich der radial gerichteten Rundbürsten 28 geöffnet sind, und über zusätzliche Richtdüsen 30'' in die Gewindegänge ein. Die weiterführende axiale Fortsetzung dieser zentrSlen Blasluftzuführung verjüngt sich gegen das düsenförmig ausgebildete Ende, wobei dieses Ende 31 die Blasluft gegen den Grund des Sacklochgewindes des RDB führt.

Unabhängig von diesem Bürstenkopf E kann ein anderer Kopf aufgesetzt werden, wobei dieser aus mit dem Gewinde korrespondierenden Filzscheiben 40 besteht, die in der Regel mit Molykote getränkt sind.

Die Absaugung dient der Entfernung der aus den Gewindegängen abgereinigten Schmutzpartikel und sie schließt am Steuerblock A an und führt im weiteren durch das zylindrische Gehäuse 17 des Antriebsoberteiles B, durch das Zwischenstück C, durch das als Führungsrohr ausgebildete Antriebsunterteil D und mündet von dort in das die Werkzeugträgerwelle 1 umfassende Absaugemantelrohr 26, um letztlich in zwei mit dem Bürstenkopf E und der Werkzeugträgerwelle 1 verbundene Absaugehutzen 32 einzumünden.

Die Anordnung bzw. die Befestigung des Absaugemantelrohres 26 an dem unteren Endflansch 25 der Werkzeugträgerwelle 1 wurde bereits beschrieben. Das sich drehende Absaugemantelrohr 26 mündet in Absaugerichtung in dem Antriebsunterteil D in eine in ihrer axialen Richtung verschiebbar einstellbaren, jedoch sich nicht drehenden Abluftsammelkammer 33 - und zwar gegen diese abdichtend - ein. Die eigentliche Werkzeugträgerwelle 1 führt im weiteren Durchgang durch diese Kammer 33 und tritt aus dieser gemeinsam mit der Kammer 33 axial verschiebbar und gegen diese abgedichtet, aus.

Mit der Abluftsammelkammer 33 sind feststehende Absaugerohre 34 verbunden, von denen im weiteren Verlauf nach oben führend jedes als Teleskopzug 35 ausgebildet ist. Die Rohre enden in dem unteren Begrenzungsflansch 36 des zum Antriebsoberteil B führenden Zwischenstückes C. Das Zwischenstück C baut auf einem einseitig klauenförmig ausgebildeten Flansch 37 auf, wobei dieser als Drehmomentenstütze gegen den RDB-Deckel wirksam ist.

In aller Regel führen zwei Absaugerohre 34 von der Abluftsammelkammer 33 durch das Antriebsunterteil D in das Zwischenstück C. Der jeweils einmündende Bereich des jeweiligen Absaugerohres 34 ist über eine lösbare Schlauchverbindung 38 mit dem jeweils durch das Antriebsoberteil B führenden Absaugerohr 34' verbunden.

Ebenfalls ist in dem Zwischenstück C durch die Kupplung 27 das Oberteil der Werkzeugträgerwelle 1 von dessen Unterteil trennbar. Das Zwischenstück C ist mit einem Montagedeckel 39 versehen, so daß von hier aus die Werkzeugträgerwelle 1 getrennt und Austauschteile installiert werden können. Des weiteren können die Schlauchverbindungen 38 der Absaugerohre 34 / 34' entfernt werden, so daß von hier aus jedes Absaugerohr 34, - z.B. durch;Ausstoßen mit geeigneten Hilfsmitteln, gereinigt werden kann. Die Absaugerohre 34' werden führend durch B und A dem Werknetz angeschlossen und die aboesaugte Luft in geeigneten Filtern gereinigt.

Die Reinigung von demontierten Muttern auf einem separaten Abstellring ist ebenfalls mit dieser Maschine möglich. In diesem Fall wird die flexible Absaugleitung am Steuerblock A abgebaut. Die Absaugung erfolgt dann über einen über die Mutter greifenden Adapter 41, dem nach unten eine modifizierte Absaugeleitung 42, die ebenfalls zu einem Filtergerät führt,angeschlossen ist. Die Belüftung der Arbeitsstelle erfolgt hier über die freigelegten Absaugleitungen.

Bei Ausfall des Druckluftlamellenmotors 8 bei eingefahrenem Bürstenkopf E kann von der Arbeitsbühne aus eingegriffen werden. Für diesen Zweck ist ein zweites in das Stirnrad 6 eingreifendes, lose mitlaufendes Ritzel 7' vorgesehen, das mit einem durch die Antriebsträgerplatte 5 greifenden Vierkantansatz 7'' Arbeitsbühne anzusetzende Handkurbel antreibbar. Der Bürstenkopf E kann damit manuell zurückgeschraubt werden.

**Patentansprüche**

1. Verfahren zur Reinigung von Sacklochgewinden in Reaktor-Druckbehältern eines Kernkraftwerkes bei aufliegendem Reaktordeckel durch eine Reinigungsmaschine, im wesentlichen während der Revisionsphase bei Einsatz der Maschine von der Arbeitsbühne aus, der sie als mobile Hängekonstruktion verbunden ist, und die in ihrem oberen Bereich in bekannter Weise einen als Wartungseinheit ausgebildeten fernbedienbaren Steuerblock A und ein in einem zylindrischen Gehäuse angeordnetes Antriebsoberteil B zum Antrieb des Bürstenkopfes aufweist, wobei zur Unterstützung der Reinigung über den Bürstenkopf Blasluft zugeführt und abgesaugt wird, dadurch gekennzeichnet,

daß die im weiteren stufenförmig von oben nach unten aufgebaute Maschine, bestehend aus:

einem zylindrischen Zwischenstück (C) für die Trennung der bzw. des Absaugerohre(s) (34) und der Werkzeugträgerwelle (1);

einem Antriebsunterteil (D), das gleichzeitig Führungsrohr für den Durchgang durch den RDB-Deckel ist und dessen Länge mit der Flanschstärke dieses Deckels korrespondiert, wobei dessen oberer zum Zwischenstück (C) gerichteter begrenzender Flansch (37), einseitig klauenförmig über den RDB-Deckel greifend und als Drehmomentenstütze ausgebildet ist,

und im Bereich des Überganges zum eigentlichen Führungsrohr eine gegen den RDB-Deckel abdichtende Dichtung (14) vorgesehen ist, sowie weiter im Antriebsunterteil (D), korrespondierend mit dem Aus- bzw. Einfahrweg der Werkzeugträgerwelle (1), eine sich bewegende Absaugeeinrichtung (33/34/35) abdichtend geführt ist, und

daß im weiteren die sich drehende Werkzeugträgerwelle (1) durch Formschluß zwischen dem von ihr getragenen Bürstenkopf (E) mit dem zu reinigenden Gewinde so lange nach unten bewegt wird, bis ein zweiter, wegeabhängiger Schalter "Motor-Stop" und "Motor-Start-Linkslauf" bestimmt und sich der Bürstenkopf (E) nunmehr bis zu seiner Wiedereinkupplung mit dem Hubzylinder (11) nach oben schraubt.

2. Verfahren nach Anspruch 1, dadurch gekennzeichnet, daß die Blasluft in zwei von einer zentrischen Zuführung ausgehende, über in radial gerichtete Verbindungen in verschiedenen Ebenen angeordnete Ringkanäle (30/30') einmündet, wobei der zuerst in das Gewinde einführende, unten liegende Kanal (30) die Blasluft in Richtung der Düsen (30'') überführt, die die Auflockerung der Anhaftungen veranlassen, während der oben liegende Ringkanal (30') die Luft zu den radial gerichteten Rundbürsten (28) zur Unterstützung der Endabreinigung überführt, und

daß die Fortsetzung der zentralen Luftzuführung in- einen gegen das Ende, düsenförmig sich verengenden Austritt (31)einmündet, und die Luft gegen den Grund des Sacklochgewindes führt, wo sie, in Verbindung mit vertikal gerichteten Tellerbürsten (29), die Ablagerungen abhebt und der Absaugung zugänglich macht.

3. Verfahren nach Anspruch 1 und 2, dadurch gekennzeichnet,

daß die abzusaugende Luft durch am Bürstenkopf (E) ansetzende Absaugehutzen (32) erfaßt wird und über ein die Werkzeugträgerwelle (1) ummantelndes, mit dieser drehend verbundenes Rohr (26) in eine lediglich in der Vertikalen verschiebbaren Abluftsammelkammer (33) abdichtend einmündet, während die Werkzeugträgerwelle (1), im weiteren ebenfalls abdichtend, durch diese Kammer hindurch führt, und

daß die Abluft der Abluftsammelkammer (33) über mindestens ein als Teleskopzug (35) ausgebildetes in das Zwischenstück (C) einmündendes Absaugerohr (34) geführt wird und von hier über weitere Verbindungen dem mit geeigneten Filtern ausgerüsteten Werknetz angeschlossen wird.

4. Verfahren nach Anspruch 3, dadurch gekennzeichnet,

daß die Abluftführung im Zwischenstück (C) über zumindest eine flexible lösbare Leitung (38) erfolgt.

5. Vorrichtung zur Durchführung des Verfahrens zur Reinigung von Sacklochgewinden in Reaktor-Druckbehältern eines Kernkraftwerkes bei aufliegendem Reaktordeckel durch eine Reingungsmaschine, im wesentlichen während der Revisionsphase bei Einsatz der Maschine von der Arbeitsbühne aus, der sie als mobile Hängekonstruktion verbunden ist, und die in ihrem oberen Bereich in bekannter Weise einen als Wartungseinheit ausgebildeten fernbedienbaren Steuerblock A und ein in einem zylindrischen Gehäuse angeordnetes Antriebsoberteil B zum Antrieb des Bürstenkopfes aufweist, wobei zur Unterstützung der Reinigung über den Bürstenkopf Blasluft zugeführt und abgesaugt wird, nach den Ansprüchen 1 bis 4, dadurch gekennzeichnet,

daß im Gehäuse (17) des Antriebsoberteiles (B) eine Antriebseinheit (8/7/6/5/3) für den Antrieb der Werkzeugträgerwelle (1) gebildet ist, die, auf einer Antriebsträgerplatte (5) aufbauend, zur Antriebsseite gerichtet,

eine Langlagerkombination (3) für die radiale und axiale Führung der durch die Antriebsträgerplatte (5) tretenden und hier mit einen Stirnrad (6) formschlüssig verbundenen Welle (1) sowie einen Druckluftlamellenmotor (8), dessen Antriebswelle durch die Trägerplatte greift, aufweist, wobei mit der Antriebswelle des Motors ein in das Stirnrad (6) eingreifendes Ritzel (7) verbunden ist,

daß weiter in der Antriebsträgerplatte (5) ein mit seinem Bund zur Antriebsseite gerichtetes zweites, lose mitlaufendes Ritzel (7') angeordnet ist, wobei der Bund oder die mit diesem Bund verbundene Welle für den Ansatz eines Hilfsantriebsmittels ausgerüstet ist,

daß auf der Antriebsseite der Antriebsträgerplatte (5) ein Hubnocken (9) angeordnet ist, in den, durch Steuergestänge (16) lösbar bzw. ausklinkbar, eine Hubknagge (10) eingreift, die ihrerseits mit der Kolbenstange (12) des am oberen Flansch des Gehäuses (17) angelenkten Hubzylinders (11) verbunden ist,

daß die Antriebsträgerplatte (5) in achsparallel zur Werkzeugträgerwelle (1) im Gehäuse (17) angeordneten Säulen (13) führbar ist, und

daß Druckluftanschlüsse für den Antrieb des Druckluftlamellenmotors, die Betätigung des Hubzylinders (11) und für die Zuführung von Blasluft über die Werkzeugträgerwelle (1) vorgesehen sind.

6. Vorrichtung nach Anspruch 5, dadurch gekennzeichnet,

daß die Antriebseinheit (8/7/6/5/3) und die Werkzeugträgerwelle (1) sowie die mit dieser verbundenen Teile der Absaugung, d.h. das Mantelrohr (26), die Absaugekammer (33) und das bzw. die dieser unmittelbar anschließenden Absaugerohr(e) (34) einem im Gehäuse (17) verschiebbar geführten Gegengewicht (18) verbunden sind.

## Revendications

1. Procédé pour le nettoyage de filets de trous borgnes dans des récipients sous pression d'un reacteur d'une centrale nucléaire, le couvercle du réacteur etant monté, par l'intermédiaire d'une machine à nettoyer, essentiellement pendant la phase de contrôle à la mise en oeuvre de la machine de la plateforme au travail à laquelle elle est reliée comme construction suspendue mobile et ayant dans sa partie supérieure, dans la manière connue, un bloc A de commande télécommande sous forme d'un ensemble de surveillance, et une partie B supérieure à actionner disposée dans le boîtier cylindrique pour actionner la tête de brosse, l'air de soufflage étant amené et aspiré par l'intermédiaire de la tête de brosse pour soutenir le nettoyage, caractérisé en ce que la machine assemblée en echelon de haut en bas comporte une pièce intercalaire (C) cylindrique pour la séparation du ou des tuyau(x) (34) et de l'arbre porte-outil (1);

une partie inférieure (D) de commande en même temps formant le tuyau de guidage pour le passage à travers du couvercle du récipient sous pression d'un réacteur et la longueur de laquelle correspondant à l'épaisseur de la bride supérieure et limitant duquel dirigée vers la pièce intercalaire (C) s'étendant unilatéralement sous forme patte sur le couvercle du récipient sous pression d'un réacteur et étant formée comme soutient du moment de torsion; et

dans la zone de transition au tuyau de guidage propre, un joint (14) isolé contre le couvercle du récipient sous pression d'un réacteur et un moyen d'aspiration (33/34/35) mobile et guidé dans une manière isolée dans la partie inférieure (D) de commande dans une manière correspondante au chemin d'extraction et de retraite, et que l'arbre de porte-outil (1) rotant, par commande mécanique entre la tête de brosse (E) portée par lui et le filet à nettoyer est mouvé vers le bas jusqu'à ce qu'un deuxième interrupteur à diverses voies commande "moteur stop" et "moteur mis en marche course à gauche", et la tête de brosse (E) maintenant se visse vers le haut jusqu'à ce qu'elle se rembraye avec le cylindre de levage (11).

2. Procédé selon la revendication 1, caractérisé en ce que l'air de soufflage débouche dans deux canaux de ceinture (30/30') émanant d'un aménage central et disposés dans des plans différents par l'intermédiaire des raccords dirigés radialement, le canal (30) en bas débouchant premièrement dans le filet transférant l'air de soufflage vers le tuyères (30'') donnant lieu au relachement les adhesions et le canal de ceinture (30') en haut transférant l'air aux brosses circulaires dirigées radialement pour soutenir le nettoyage final, et que le prolongement de l'alimentation d'air central débouche dans une sortie (31) rétrécie sous forme tuyère vers l'extrémité en alimentant l'air vers le fond du filet du trous borgne en disque (29) dirigées verticalement, des dépôts précipités en les soumettant à l'aspiration.

3. Procédé selon les revendications 1 et 2, caractérisé en ce que l'air à aspirer est seisi par des capotes à aspirer (32) montés sur la tête de brosse (E) et par l'intermédiaire d'un truyau (26) envelopant l'arbre (1) porte-outil est relié au dernier dans une manière rotante débouche, dans une manière isolante, dans une chambre (33) collectrice d'air d'évacuation déplacable seulement dans la direction verticale, tandique l'arbre porte-outil (1) traverse cette chambre également dans une manière isolante, et que l'air d'évacuation de la chambre collectrice (3) est guide au moins par un tuyau d'aspiration (34) sous forme d'un tube telescopique (35) debouchant dans la pièce intercalaire (C) et d'ici, par l'intermédiaire des autres raccords, est relié au réseu d'usine fourni de filtres convenables.

4. Procédé selon la revendication 3, caractérisé en ce que le guidage de l'air d'évacuation dans la pièce intercalaire (C) se fait par l'intermédiaire au moins d'une conduite (38) souple et détachable.

5. Appareil pour réaliser le procédé pour le nettoyage de filets de trous borgnes dans des récipients sous pression d'un réacteurs d'une centrale nucléaire, le couvercle du reacteur étant monte, par l'intermédiaire d'une machine à nettoyer, essentiellement pendant la phase de contrôle, à la mise en oeuvre de la machine de la plateforme au travail à laquelle elle est relié comme construction suspendue et mobile et ayant, dans sa partie supérieure, dans la manière connue, un bloc A télecommandé sous forme d'un ensemble de surveillance et une partie B supérieure à actionner disposés dans le boîtier cylindrique pour commander la tête de brosse, l'air de soufflage étant amené et aspiré par l'intermédiaire de la tête de brosse pour soutenir le nettoyage, selon les revendications 1 à 4, caractérisé en ce qu'un ensemble de commande (8/7/6/5/3) pour la commande de l'arbre (1) porteoutil est formé dans le boîtier (17) de la partie supérieure (B) de commande, l'ensemble basé sur une plaque (5) portecommande et dirigé vers le côté de commande, comporte une combinaison (3) à palier oblong pour le guidage radial et axial de l'arbre (1) traversant la plaque (5) porte-commande et relié ici à une roue cylindrique (6) dans une manière commandée mécaniquement et un moteur (8) à piston rotatif à palettes pneumatique l'arbre de commande duquel s'étend à travers de la porte-plaque, un pignon (7) s'engrenant la roue cylindrique (6) étant relié à l'arbre de commande dû moteur;

qu'un second pignon (7') corotatif dans une manière volante et dirigé avec son collet vers le côté de commande est disposé dans la plaque (5) porte-commande, le collet ou l'arbre relié à ce collet étant construit pour l'assemblage d'un moyen auxiliaire;

qu'une came de levage (9) est disposée sur le côté de commande de la plaque porte-commande (5), dans laquelle s'engrène un taquet de levage (10) dans une manière détachable ou déclenchable par tringles de commande (16), taquet de levage qui est relie à la tige de piston (12) du cylindre de levage (11) articulé à la bride supérieur du boîtier (17),

que la plaque (5) porte-commande est guidable dans les colonnes (13) disposées dans le boîtier (17) dans une manière parallèle à l'arbre (1) porte-outil, et que des raccords pneumatiques sont purvus pour commander le moteur (8) à piston rotatif à palettes pneumatique, pour actionner le cylindre de levage (11) et pour alimenter de l'air de soufflage par l'intermédiaire de l'arbre (1) porte-outil.

6. Appareil selon la revendication 5, caractérisé en ce que l'ensemble de commande (8/7/6/5/3) et l'arbre porteoutil (1) et les partie de l'aspiration reliées au dernier, notemmant le tube enjoliveur (26), la chambre d'aspiration (33) et le ou les tuyau(x) (34) directement suivant(s) la chambre d'aspiration, sont reliés à un contre-poids (18) guidé deplacablement dans le boîtier (17).

## Claims

1. A method of cleaning blind hole threads in reactor pressure vessels of a nuclear power station, with the reactor cover mounted, by means of a cleaning machine, substantially during the inspection phase, with the machine being operated from the working platform to which it is connected in the form of a mobile suspension structure and which, in the upper area thereof, comprises, in known manner, a remote-handling control block A formed as a service unit, and a driving top part B disposed in a cylindrical housing for driving the brush head, with blow air being supplied and exhausted via the brush head to support the cleaning operation, characterized in that the machine built up in the form of steps from top to bottom, comprises: a cylindrical connecting piece (C) for the separation of the exhaust pipe or pipes (34) and the tool carrier shaft (1); a driving bottom part (D) at the same time forming the guide pipe for the passage through the cover of the reactor pressure vessel, with the length thereof corresponding to the strength of the flange of the said cover the upper confining flange (37) of which directed toward the connecting piece (C) is of a jaw-type configuration extending over the cover of the reactor pressure vessel and formed as a torque support, with a seal (l4) being provided in the transitory zone passing into the actual guide pipe and sealing against the cover of the reactor pressure vessel and a mobile exhaust means (33/34/35) being sealingly guided in the driving bottom part (D) in a manner corresponding to the extension and retraction of the tool carrier shaft (1); that the rotating tool carrier shaft (1), by form locking between the brush head (E) carried by said shaft and the thread to be cleaned is moved downwardly until a second way-responsive switch commands "motor stop" and "motor start lefthand run" and brush head (E) now screws upwardly pending re-engagement thereof with the lift cylinder (11).

2. A method according to claim 1, characterized in that the blow air terminates into two annular channels (30/30') emerging from a central feed and disposed in different planes via radially directed connections, with the bottom channel (30) first leading into the thread transferring the blow air toward the nozzles (30') causing the adhesions to loosen while the top annular chamber (30') transfers the air to the radially directed circular brushes (28) to support final cleaning, and that the extension of the central air supply terminates in an outlet (31) constricted in nozzle-type manner toward the end to guide the air toward the bottom of the blind hole thread where it lifts in conjunction with the vertically extending plate brushes (29) the depositions to cause them to be exhausted.

3. A method according to claims 1 and 2, characterized in that the air to be exhausted is seized by exhaust scoops (32) mounted on said brush head (E) and, via a pipe (26) coating the tool carrying shaft (1) and rotatingly connected thereto sealingly terminates in an exhaust air collecting chamber (33) displaceable in the vertical direction, while the tool carrying shaft (1) is guided, equally in sealing manner, through the said chamber, and that the exhaust air from the exhaust air collecting chamber (33) is guided via at least one exhaust pipe (34) formed as a telescopic tube (35) and terminating in the connecting piece (C) from where, via further connections, it is connected to the operating system furnished with suitable filters.

4. A method according to claim 3, characterized in that the exhaust air guidance in the connecting piece (C) is effected via at least one flexibly detachable conduit (38).

5. An apparatus for carrying into effect the method of cleaning blind hole threads in reactor pressure vessels of a nuclear power station, with the reactor cover mounted, by a cleaning machine, substantially during the inspection phase, with the machine being operated from the working platform to which it is connected as a mobile suspension structure and which, in the upper area thereof, comprises in known manner, a remote-handled control block A formed as a service unit, and a driving top part B disposed in a cylindrical housing, with blow air being supplied and exhausted via the brush head in order to support the cleansing operation, according to claims 1 to 4, characterized in that formed in housing (17) of the driving upper part (B) is a driving unit (8/7/6/5/3) for driving the tool carrying shaft (1) which, based on a driving carrier plate (5) and directed toward the driving side, includes a long bearing combination (3) for the radial and axial guidance of the shaft (1) passing through the driving carrier plate (5) and, at that point, being connected in form-locking manner, to a spur gear (6) and a pneumatic multiple disk engine (8) the driving shaft of which extends through the carrier plate, with a pinion (7) engaging the spur gear (6) being connected to the motor driving shaft;

that a second loosely engaged pinion (7') directed with the driving carrier plate thereof toward the driving side is located in the driving carrier plate (5), with the sleeve or shaft connected to the sleeve being designed to receive an auxiliary driving means;

that disposed on the driving side of the driving carrier plate (5) is a lift cam (9) engaged by a lift dog (10) in a manner detachable or releasable by a control linkage (16), which lift dog (10), in its turn, is connected to the piston rod (12) of the lift cylinder (11) pivoted to the upper flange of the housing (17);

that the driving carrier plate (15) is guidable in columns (13) disposed in the housing (13) in a manner axially parallel to the tool carrying shaft (1), and that compressed air connections for driving the pneumatic multiple disk engine,actuating the lift cylinder (11) and supplying blow air over the tool carrying shaft (1), are provided.

6. An apparatus according to claim 5, characterized in that the driving unit (8/7/6/5/3) and the tool carrier shaft (1) and parts of the exhaust system connected thereto, i.e. the protecting tube (26), the exhaust chamber (33) and the exhaust tube or tubes (34) directly coupled to the said exhaust chamber, are connected to a counterweight (18) displaceably guided in the housing (17).

Fig.1

0 075 155

Fig.2
(Schnitt B-C aus Fig.3)

Fig.3
(Ansicht A aus Fig.2)

3

Fig. 4

Fig. 5

Fig. 6

(Schnitt D-E aus Fig.5)

Fig. 7